# EUROPÄISCHE PATENTANMELDUNG

(11) **EP 4 529 771 A1**
(43) Veröffentlichungstag der Anmeldung: **02.04.2025**
(21) Anmeldenummer: 24193538.6
(22) Anmeldetag: 08.08.2024
(51) Int. Cl.: A22C 7/00

(54) **VORRICHTUNG ZUM HERSTELLEN VON FLEISCHPRODUKTEN**

(30) Priorität: 28.09.2023 DE 102023003928
(71) Anmelder: Rühle GmbH, 79865 Grafenhausen (DE)
(72) Erfinder: Rühle, Claus, 79859 Schluchsee (DE)
(74) Vertreter: Huwer, Andreas

(57) **Zusammenfassung**

Eine Vorrichtung (1) zum Herstellen von Fleischprodukten hat ein an zumindest einer Seite offenes Gehäuse (2), in dem mehrere Formbehälter-Aufnahmeräume (3) übereinander angeordnet sind, die jeweils zur Aufnahme mindestens eines mit einer Fleischportion befüllbaren Formbehälters dienen. Jedem Formbehälter-Aufnahmeraum (3) ist jeweils mindestens eine Presselemente-Anordnung mit einem oberhalb des Formbehälter-Aufnahmeraums (3) angeordneten oberen Presselement (8A, 8B) und einem unterhalb des betreffenden Formbehälter-Aufnahmeraums (3) angeordneten unteren Presselement (9A, 9B) zugeordnet. Die Presselemente (8A, 8B, 9A, 9B) der einzelnen Presselemente-Anordnungen sind zwischen einer Ruhestellung und einer Pressstellung aufeinander zu und voneinander wegbewegbar. An mindestens einem Presselement (8A, 8B, 9A, 9B) jeder Presselemente-Anordnung ist jeweils mindestens ein Ablenkelement für ein Zugelement (17) angeordnet, das derart über die Ablenkelemente der Presselemente-Anordnungen geführt ist, dass die oberen und unteren Presselemente (8A, 8B, 9A, 9B) der Presselemente-Anordnungen durch Aufbringen einer Zugkraft auf das mindestens eine Zugelement (17) jeweils aus ihrer Ruhestellung in die Pressstellung relativ zueinander bewegbar sind. Zum Spannen des Zugelements (17) ist dieses an seinem einen Ende gegen das Gehäuse (2) abgestützt ist und an seinem anderen Ende mit einem Antrieb (18) verbunden.

## Beschreibung

Die Erfindung betrifft eine Vorrichtung zum Herstellen von Fleischprodukten, wobei die Vorrichtung ein an zumindest einer Seite offenes Gehäuse zum Aufnehmen einer Mehrzahl von übereinander angeordneten, jeweils mit einer Fleischportion befüllbaren separaten Formbehältern umfasst, und wobei an dem Gehäuse zumindest ein Antrieb gelagert ist.

Eine derartige Vorrichtung ist aus der DE 10 2010 031 011 B4 bekannt. Die Vorrichtung hat ein Gehäuse mit einem Aufnahmeraum, der derart dimensioniert und an die Größe der Formbehälter angepasst ist, dass er zum Aufnehmen mehrerer Formbehälter-Stapel, die jeweils eine Vielzahl von unmittelbar aufeinander angeordneten Formbehältern aufweisen, geeignet ist. An dem Gehäuse ist über den Formbehälter-Stapeln ein Antrieb gelagert, der einen im Gehäuse in vertikale Richtung auf die Stapel zu und von diesen weg verschiebbar gelagerten Druckstempel antreibt, mit dem eine in diese Richtung auf die Formbehälter-Stapel wirkende Presskraft ausgeübt werden kann.

Die Formbehälter haben jeweils eine Wanne zum Einlegen einer Fleischportion und einen Deckel zum Verschließen der Wanne. Der Deckel hat ein an die Form der Öffnung der Wanne angepasstes Formteil, das bei am seitlichen Rand der Wanne aufliegendem Deckel derart in die Wanne hineinragt, dass es vom Boden der Wanne beabstandet ist.

Die Formbehälter werden jeweils derart mit einer Fleischportion befüllt, dass das Formteil nach dem Aufsetzen des Deckels auf die Wanne bereits in das Innere der Wanne hineinragt. Die befüllten Formbehälter werden anschließend in dem Aufnahmeraum des Gehäuses gestapelt und mit einer in Stapelrichtung wirkenden Kraft beaufschlagt, so dass die Stützstreben aller Formbehälter auf dem Wannenrand aufsitzen. Nach Angabe der Offenlegungsschrift soll dadurch auf jede Fleischportion im Stapel unabhängig vom Gewicht der im Stapel befindlichen Formbehälter dieselbe Druckkraft ausgeübt werden. Dies setzt jedoch voraus, dass die einzelnen Behälter derart mit Fleisch befüllt wurden, dass die in den einzelnen Formbehältern befindlichen Fleischportionen gleich stark komprimiert werden, wenn die Stützstreben aller Formbehälter auf dem Wannenrand aufsitzen. Zum Pressen von unterschiedlich großen Fleisch- und Formbehältern und/oder unterschiedlich großen Fleischportionen ist die vorbekannte Vorrichtung daher nur beding geeignet. Ungünstig ist außerdem, dass die jeweils zwischen dem oberen und unteren Ende der einzelnen Formbehälter-Stapel auf diese aufgebrachten Presskräfte über das Gehäuse der Vorrichtung übertragen werden. Das Gehäuse muss daher entsprechend stabil und biegesteif ausgestaltet sein. Das Gehäuse der Vorrichtung weist daher ein relativ hohes Gewicht auf.

Es besteht deshalb die Aufgabe, eine Vorrichtung der eingangs genannten Art zu schaffen, bei die einzelnen Formbehälter beim Pressen auch dann im Wesentlichen mit dem gleichen Druck beaufschlagt werden, wenn das Gehäuse mit unterschiedlichen Formbehältern und/oder unterschiedlichen Fleischportionen bestückt ist. Die Vorrichtung soll außerdem einen kostengünstigen Aufbau und ein leichtes Gehäuse ermöglichen.

Diese Aufgabe wird mit den Merkmalen des Patentanspruchs 1 gelöst. Erfindungsgemäß ist dabei vorgesehen, dass in dem Gehäuse mehrere Formbehälter-Aufnahmeräume übereinander angeordnet sind, die jeweils zur Aufnahme eines einzelnen Formbehälters oder mehrerer in horizontaler Richtung nebeneinander angeordneter Formbehälter vorgesehen sind, dass jedem Formbehälter-Aufnahmeraum jeweils mindestens eine Presselemente-Anordnung mit einem oberhalb des betreffenden Formbehälter-Aufnahmeraums angeordneten oberen Presselement und einem unterhalb des betreffenden Formbehälter-Aufnahmeraums angeordneten unteren Presselement zugeordnet ist, dass die oberen und unteren Presselemente der einzelnen Presselemente-Anordnungen jeweils derart an dem Gehäuse gelagert sind, dass sie zwischen einer Ruhestellung und einer Pressstellung aufeinander zu und voneinander wegbewegbar sind, dass an mindestens einem Presselement jeder Presselemente-Anordnung jeweils mindestens ein Ablenkelement für ein Zugelement angeordnet ist, dass das Zugelement über die Ablenkelemente mehrerer Presselemente-Anordnungen derart geführt ist, dass die oberen und unteren Presselemente dieser Presselemente-Anordnungen durch Aufbringen einer Zugkraft auf das mindestens eine Zugelement jeweils aus ihrer Ruhestellung in die Pressstellung relativ zueinander bewegbar sind, und dass das mindestens eine Zugelement zum Positionieren der Presselemente-Anordnungen in der Pressstellung an seinem einen Ende gegen das Gehäuse abgestützt ist und mit an seinem anderen Ende mit dem Antrieb in Antriebsverbindung steht.

In vorteilhafter Weise können dadurch in die einzelnen Presselemente-Anordnungen unterschiedliche Größen von Formbehältern eingeschoben. Damit ist die Vorrichtung sehr flexibel bestückbar. Jeder Formbehälter wird in der Pressstellung im Wesentlichen mit dem gleichen Druck beaufschlagt. Das macht die Produktion gleichmäßiger als bei Vorrichtungen, bei denen die Formbehälter direkt aufeinander gestapelt werden, so dass auf den untersten Formbehälter zum Beispiel noch das Gewicht der darüber befindlichen Formbehälter wirkt. Da die einzelnen Presselemente-Anordnungen zentral über mindestens ein Zugelement in die Pressstellung gebracht werden, wird der Druck auf das Gehäuse weitestgehend eliminiert, indem die Kräfte innerhalb der Presselemente-Anordnungen gegeneinander wirken und somit kaum eine Auswirkung auf das Gehäuse haben.

Das Gehäuse der erfindungsgemäßen Vorrichtung kann so gebaut sein, dass es alle Arten von Formbehältern aufnehmen kann, da jede Presselemente-Anordnung einzeln konfiguriert und in das Gehäuse integriert werden kann. Somit ist es auch für Handwerkerbetriebe interessant, die Erfindung zu verwenden.

Bei einer vorteilhaften Ausgestaltung der Erfindung ist jeweils ein Presselement jeder Presselemente-Anordnung fest mit dem Gehäuse verbunden und das andere Presselement ist als bewegliches Presselement ausgestaltet, welches auf das zuerst genannte Presselement zu und von diesem weg bewegbar an dem Gehäuse gelagert ist. Dies ermöglicht einen einfachen Aufbau der Vorrichtung und einen noch gleichmäßigere Druckbeaufschlagung der Formbehälter.

Bei einer bevorzugten Ausführungsform der Erfindung ist das Zugelement über die Ablenkelemente von mindestens drei Presselemente-Anordnungen geführt, wobei das Zugelement - ausgehend von seinem mit dem Gehäuse verbundenen einen Ende zu seinem mit dem Antrieb verbundenen anderen Ende - bei jeder der in Reihe geschalteten Presselemente-Anordnungen jeweils zunächst über die Ablenkelemente des entlang des Zugelements näher an dem Antrieb angeordneten Presselements und danach über die Ablenkelemente des entlang des Zugelements weiter von dem Antrieb entfernten Presselements der betreffenden Presselemente-Anordnung verläuft, und dass das Zugelement im weiteren Verlauf bei der ersten bis vorletzten Presselemente-Anordnung jeweils zu einer weiteren Presselemente-Anordnung und bei der letzten Presselemente-Anordnung zum Antrieb führt. Das Zugelement läuft also jeweils zumindest bei der zweiten bis vorletzten Presselemente-Anordnung um den Formbehälter-Aufnahmeraum herum, bevor es zur nächsten an dem Zugelement angeordneten Presselemente-Anordnung führt. Dadurch sind die von den Presselementen auf die Formbehälter aufgebrachten Presskräfte völlig unabhängig vom Gewicht der Formbehälter und der darin befindlichen Fleischportionen.

Vorteilhaft ist, wenn das Gehäuse mindesten eine Führungssäule aufweist, die sich entlang mehrerer übereinander angeordneter Formbehälter-Aufnahmeräume erstreckt, und dass die beweglichen Presselemente der diesen Formbehälter-Aufnahmeräumen zugeordneten Presselemente-Anordnungen an der mindestens einen Führungssäule verschiebbar gelagert sind. Hierdurch ergibt sich ein einfacher und leichter Aufbau des Gehäuses. Zweckmäßigerweise sind dabei an den beweglichen Presselementen Führungshülsen oder Schlitten angeordnet, die auf der Führungssäule axial verschiebbar gelagert sind.

Bevorzugt sind die fest mit dem Gehäuse verbundenen Presselemente ebenfalls an der Führungssäule gelagert und gegen axiales Verschieben entlang der Führungssäule gesichert. Hierdurch kann das Gehäuse noch leichter gebaut werden.

Bei einer vorteilhaften Ausgestaltung der Erfindung weist die Vorrichtung mindestens zwei parallel zueinander verlaufende Führungssäulen auf, zwischen denen mehrere übereinander angeordnete Formbehälter-Aufnahmeräume liegen, wobei die diesen Formbehälter-Aufnahmeräumen zugeordneten Presselemente jeweils als Spannbrücken ausgestaltet sind, die an ihrem einen Brückenende an der einen Führungssäule und an ihrem anderen Brückenende an der anderen Brückenende gelagert sind. Durch diese Maßnahme kann beim Pressen der Formbehälter das Auftreten von Biegemomente an den Führungssäulen weitestgehend vermieden werden. Hierdurch können die Führungssäulen mit einem relativ kleinen Querschnitt ausgestaltet werden, wodurch das Gewicht des Gehäuses weiter reduziert wird.

Bei einer vorteilhaften Ausführungsform der Erfindung ist jedem Formbehälter-Aufnahmeraum jeweils eine erste und eine zweite Presselemente-Anordnung zugeordnet, deren Presselemente jeweils als an Führungssäulen gelagerte Spannbrücken ausgestaltet sind, wobei die Spannbrücken der ersten Presselemente-Anordnungen in einer ersten Vertikalebene und die Spannbrücken der zweiten Presselemente-Anordnungen in einer parallel zu der ersten Vertikalebene beabstandeten zweiten Vertikalebene angeordnet sind. Hierdurch kann beim Pressen der Formbehälter die Presskraft besonders gleichmäßig und schonend auf die in den Formbehältern befindlichen Fleischportionen übertragen werden.

Bei einer Weiterbildung der Erfindung ist vorgesehen, dass die Formbehälter-Aufnahmeräume in dem Gehäuse matrixförmig in mehreren Reihen und mehreren Spalten angeordnet sind, und dass das mindestens eine Zugelement über die Ablenkelemente der Presselemente-Anordnungen sämtlicher Reihen und Spalten verläuft. Dies ermöglich einen besonders kompakten und leichten Aufbau der Vorrichtung. Zwischen zueinander benachbart nebeneinander angeordneten Spalten mit Formbehälter-Aufnahmeräumen kann mindestens ein Tragmast angeordnet sein, von dem Kragarme abstehen, an denen Führungsrollen oder dergleichen Führungselemente angeordnet sind, über die das mindestens eine Zugelementgeführt ist. Von dem Tragmast können weitere Kragarme abstehen, welche die fest mit dem Gehäuse verbundenen Presselemente-Anordnung tragen. Bei Bedarf kann der Tragmast auf einem Trägerwagen angeordnet sein, der mit Hilfe von Lenkrollen verfahrbar ist.

Das mindestens eine Zugelement ist bevorzugt als Seil ausgestaltet. Das Seil kann insbesondere ein Drahtseil sein oder aus Kevlar bestehen. Dieses ermöglicht bei kompakten Abmessungen die Übertragung großer Zugkräfte. Es sind aber auch andere Ausgestaltungen denkbar, bei denen das mindestens eine Zugelement als Band, Riemen oder Kette ausgeführt ist.

Der Antrieb ist bevorzugt als Seilwinde ausgestaltet. Diese kann als Betätigungselement eine Handkurbel aufweisen. Die Seilwinde ist bevorzugt am oberen Ende des Gehäuses über den Formbehältern angeordnet, wo die Handkurbel gut für den Benutzer zugänglich ist.

Bei einer zweckmäßigen Ausgestaltung der Erfindung sind die Ablenkelemente als Rollen ausgestaltet, die jeweils drehbar an dem ihnen zugeordneten Presselement gelagert sind. Hierdurch wird beim Spannen des mindestens einen Zugelements das Auftreten von Reibkräften weitestgehend vermieden. Somit kann das mindestens eine Zugelement von einem Benutzer mit vergleichsweise geringem Kraftaufwand gespannt werden. Es sind aber auch andere Ausgestaltungen denkbar, bei denen die Ablenkelemente gekrümmte Gleitflächen aufweisen, über welche das mindestens einen Zugelement geführt ist.

Bei einer Weiterbildung der Erfindung weist die Vorrichtung eine Rückstelleinrichtung auf, mittels der die einzelnen Presselemente-Anordnungen jeweils aus der Pressstellung in die Ruhestellung zurückbewegbar sind. Dies ermöglicht sowohl ein einfaches Einsetzen der Formbehälter in die Formbehälter-Aufnahmeräume als auch ein einfaches Entnehmen der Formbehälter aus den Formbehälter-Aufnahmeräumen.

Vorteilhaft ist, wenn die Rückstelleinrichtung für die einzelnen Formbehälter-Aufnahmeräume jeweils mindestens eine Rückstellfeder aufweist, gegen deren Rückstellkraft jeweils die oberen und unteren Presselemente der betreffenden Presselemente-Anordnung aus der Pressstellung in die Ruhestellung verstellbar sind. Beim Entspannen des Zugelements öffnen die Rückstellfedern die Presselemente-Anordnungen, so dass die einzelnen Formbehälter gut seitlich aus dem Gehäuse entnommen werden können. Die Rückstellfedern sind bevorzugt als Schraubenfedern ausgestaltet, welche jeweils auf der Führungssäule angeordnet und mit ihrem unteren Ende gegen das eine, vorzugsweise feste Presselement und mit ihrem oberen Ende gegen das andere, vorzugsweise beweglichen Presselement der betreffenden Presselemente-Anordnung angeordnet ist.

Bei einer anderen zweckmäßigen Ausführungsform der Erfindung weist die Rückstelleinrichtung ein Zugmittel auf, das derart mit den Presselementen der Presselemente-Anordnungen in Antriebsverbindung steht, dass die Presselemente-Anordnungen durch Aufbringen einer Zugkraft auf das Zugmittel aus der Pressstellung in die Ruhestellung verstellbar sind. Dabei ist das Zugmittel vorzugsweise ein Seil, insbesondere ein Stahlseil oder ein Seil aus Kevlar. Das Zugmittel kann aber auch ein Band, ein Riemen oder eine Kette sein.

Nachstehend ist ein Ausführungsbeispiel der Erfindung anhand der Zeichnung näher erläutert. Es zeigt:
- Fig. 1: eine Vorrichtung zum Herstellen von Fleischprodukten, die ein Gehäuse mit einer Vielzahl von übereinander angeordneten Formbehälter-Aufnahmeräumen aufweist, in die jeweils mindestens ein mit einer Fleischportion befüllbarer Formbehälter einsetzbar ist, wobei an einzelnen Formbehälter-Aufnahmeräumen jeweils ein oberes und ein unteres Presselement angeordnet ist, welche den Formbehälter-Aufnahmeraum zwischen sich einschließen,
- Fig. 2: eine Darstellung ähnlich Fig. 1, wobei jedoch in die Formbehälter-Aufnahmeräume jeweils ein Formbehälter eingesetzt ist und wobei Presselemente in einer Ruhestellung angeordnet sind,
- Fig. 3: eine Darstellung ähnlich Fig. 2, wobei sich die Presselemente jedoch in einer Pressstellung befinden,
- Fig. 4: einen Formbehälter mit einer Wanne zum Einlegen einer Fleischportion und einem Deckel zum Verschließen der Wanne, wobei der Formbehälter in der Ruhestellung angeordnet ist,
- Fig. 5: eine Darstellung ähnlich Fig. 4, wobei jedoch der Formbehälter in der Pressstellung angeordnet ist,
- Fig. 6: einen vergrößerten Ausschnitt von Fig. 1, auf dem ein zwischen oberen und unteren Presselementen angeordneter Formbehälter-Aufnahmeraum zusehen, wobei sich die oberen Presselemente in ihrer Ruhestellung befinden,
- Fig. 7: eine Vorderansicht auf einen Formbehälter-Aufnahmeraum, auf der eine Presselemente-Anordnung mit zwei in Ruhestellung befindlichen Presselementen zu sehen ist, wobei im Inneren der Presselemente-Anordnung vorgesehene, durch diese verdeckte Ablenkelemente für ein Zugelement strichliniert dargestellt sind,
- Fig. 8: eine Darstellung ähnlich Fig. 7, wobei jedoch in dem Formbehälter-Aufnahmeraum ein Formbehälter angeordnet ist,
- Fig. 9: eine Darstellung ähnlich Fig. 8, wobei jedoch die Presselemente und der Formbehälter in der Pressstellung angeordnet sind,
- Fig. 10: eine isometrische Teilansicht der Vorrichtung, bei der die Presselemente nur teilweise dargestellt sind, um die Sicht auf im Inneren der Presselemente angeordnete Ablenkelemente freizugeben, über die das Zugelement geführt ist,
- Fig. 11: eine schematische Darstellung, welche den Verlauf des Zugelements zeigt,
- Fig. 12: einen vergrößerten Ausschnitt von Fig. 2,
- Fig. 13: einen vergrößerten Ausschnitt von Fig. 3,
- Fig. 14: eine isometrische Darstellung eines in der Ruhestellung angeordneten ersten Formbehälters,
- Fig. 15: eine Längsseitenansicht des in Fig. 14 gezeigten Formbehälters,
- Fig. 16: eine Schmalseitenansicht des in Fig. 14 gezeigten, in der Ruhestellung befindlichen Formbehälters,
- Fig. 17: eine Darstellung ähnlich Fig. 16, wobei jedoch der Formbehälter in der Pressstellung angeordnet ist,
- Fig. 18: eine isometrische Darstellung eines in der Ruhestellung angeordneten zweiten Formbehälters,
- Fig. 19: eine Schmalseitenansicht des in Fig. 18 gezeigten, in der Ruhestellung befindlichen Formbehälters,
- Fig. 20: eine Darstellung ähnlich Fig. 19, wobei jedoch der Formbehälter in der Pressstellung angeordnet ist,
- Fig. 21: eine Schmalseitenansicht eines in der Ruhestellung angeordneten dritten Formbehälters, und
- Fig. 22: eine Darstellung ähnlich Fig. 21, wobei jedoch der Formbehälter in der Pressstellung angeordnet ist.

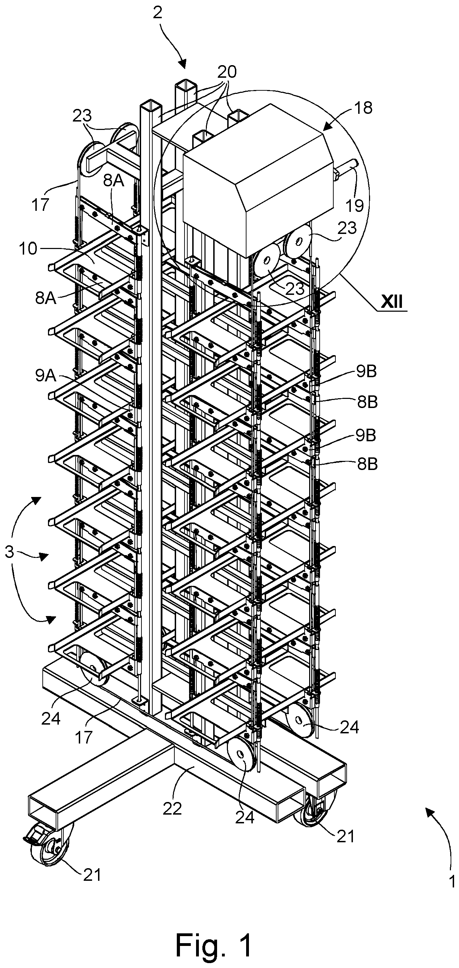

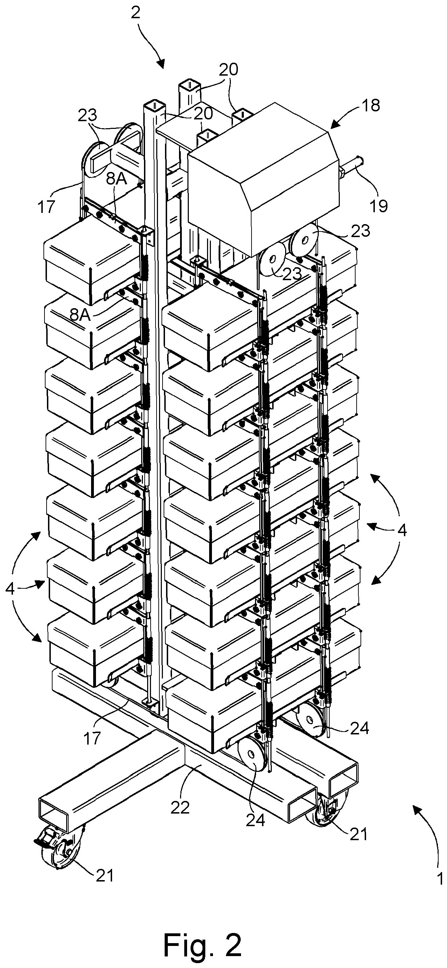

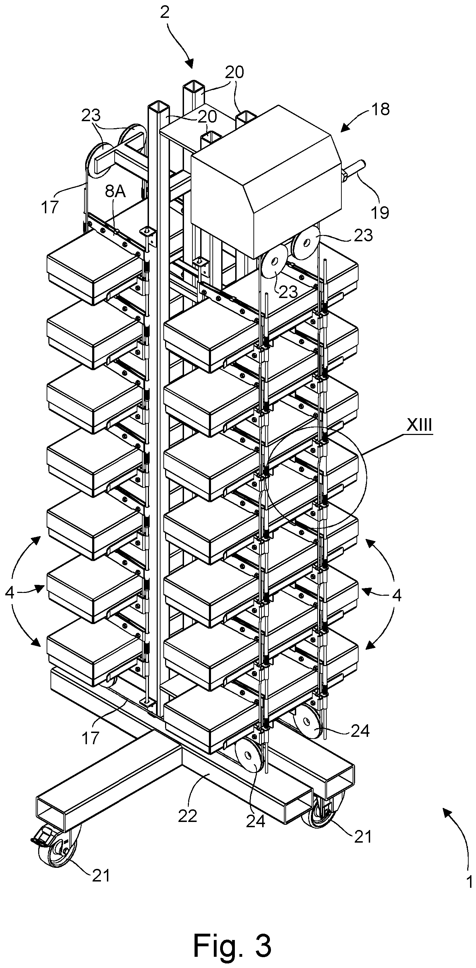

Eine in Fig. 1 im Ganzen mit 1 bezeichnete Vorrichtung zum Herstellen von Fleischprodukten weist ein als Gestell ausgestaltetes Gehäuse 2 mit einer Vielzahl von Formbehälter-Aufnahmeräumen 3 auf, die matrixförmig in mehreren Reihen übereinander und mehreren Spalten seitlich nebeneinander in dem Gehäuse 1 angeordnet sind. An seiner Vorderseite hat das Gehäuse 1 für jeden Formbehälter-Aufnahmeraum 3 jeweils Öffnung, durch die ein Formbehälter 4 in den betreffenden Formbehälter-Aufnahmeraum 3 einbringbar (Fig. 1) und aus diesem entnehmbar ist (Fig. 2 und 3).

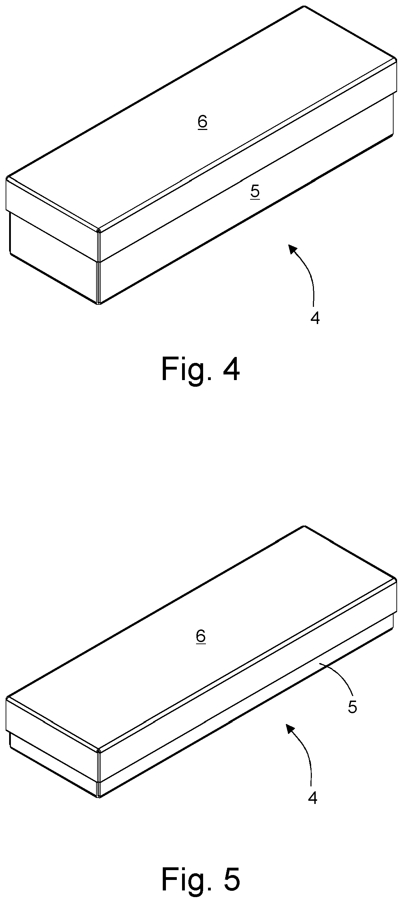

Die Formbehälter 4 haben jeweils eine Wanne 5 zum Aufnehmen einer Fleischportion und einen Deckel 6 zum Verschließen der Wanne 5. Der Deckel 6 ist aus einer Ruhelage (Fig. 4), in der er auf der Fleischportion aufliegend die Innenhöhlung der ihm zugeordneten Wanne überdeckt in einem ersten Abstand zum Boden der Wanne 5 angeordnet. Aus der Ruhelage ist der Deckel 6 durch Aufbringen einer Presskraft in eine Pressstellung (Fig. 5) auf den Boden der Wanne 5 zu bewegbar. In der Pressstellung ist der Deckel 6 in einem zweiten Abstand zum Boden der Wanne 5 angeordnet ist, der kleiner ist als der erste Abstand. Wenn der Deckel 6 in der Ruhelage auf einer in der Wanne 5 befindlichen Fleischportion aufliegt und dann in die Pressstellung verschoben wird, wird die Fleischportion komprimiert.

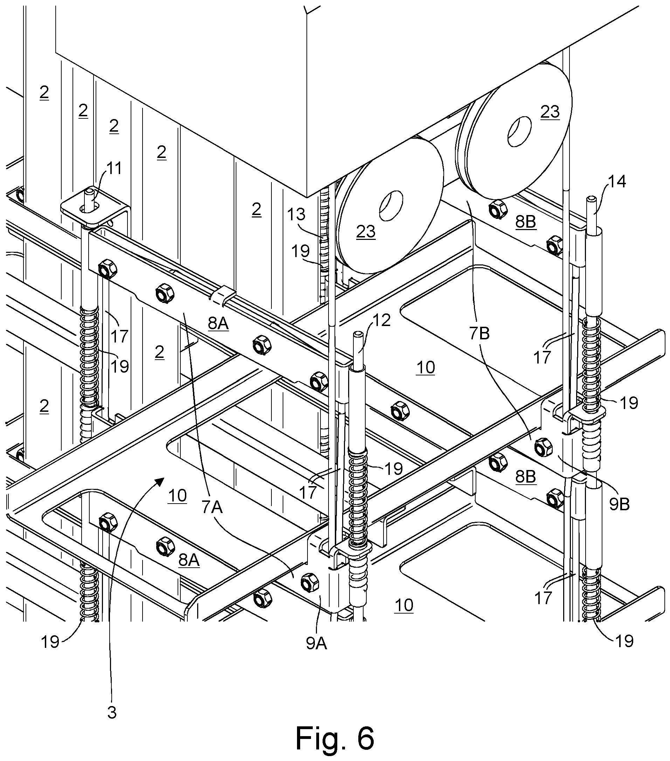

Wie in Fig. 6 besonders gut zu sehen ist, weist die Vorrichtung 1 für jeden Formbehälter-Aufnahmeraum 3 jeweils eine vordere Presselemente-Anordnung 7A und eine hintere Presselemente-Anordnung 7B auf, die jeweils ein oberhalb des betreffenden Formbehälter-Aufnahmeraums 3 angeordnetes oberes Presselement 8A, 8B und ein unterhalb des betreffenden Formbehälter-Aufnahmeraums 3 angeordnetes unteres Presselement 9A, 9B umfassen. Die oberen und unteren Presselemente 8A, 9A der vorderen Presselemente-Anordnung 7A sind jeweils näher an der an der Gehäusevorderseite vorgesehenen Öffnung des betreffenden Formbehälter-Aufnahmeraums 3 angeordnet als oberen und unteren Presselemente 8B, 9B der hinteren Presselemente-Anordnung.

Die unteren Presselemente 9A, 9B sind jeweils fest mit dem Gehäuse 2 verbunden. Auf den beiden unteren Presselementen 9A, 9B jedes Formbehälter-Aufnahmeraums 3 weist das Gehäuse jeweils ein Bodenblech 10 auf, welches den Formbehälter-Aufnahmeraum 3 nachunten hin begrenzt.

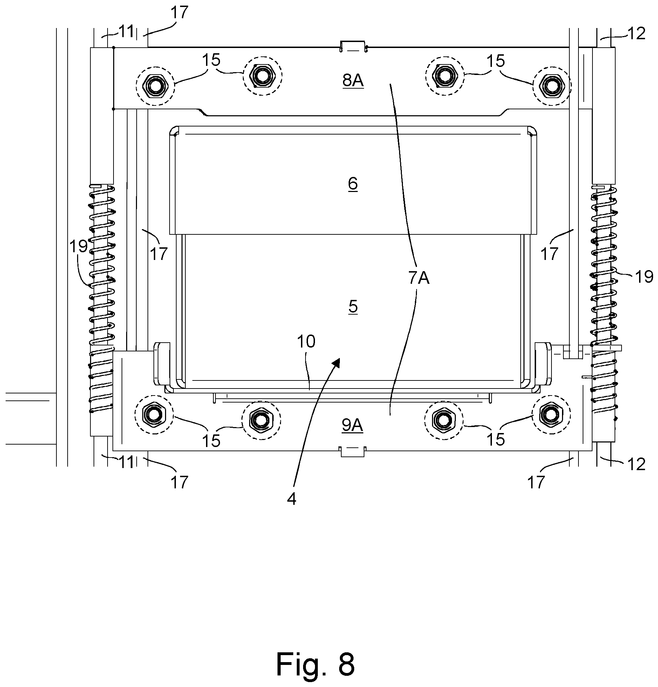

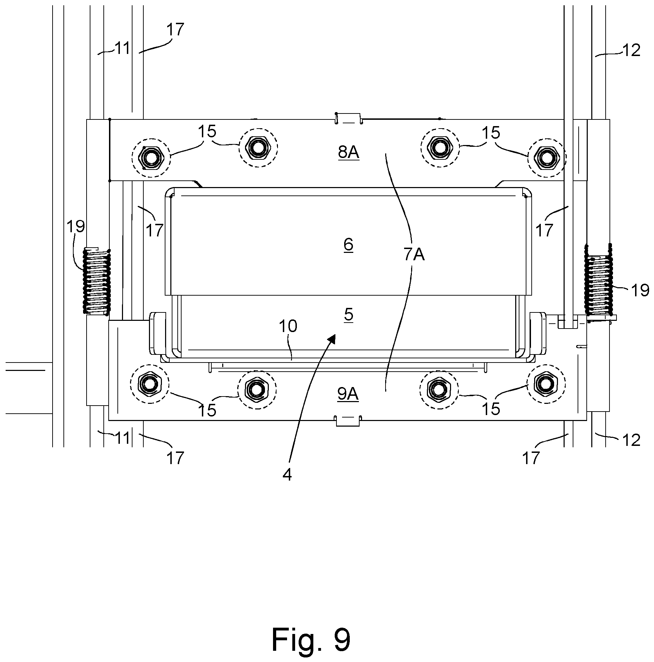

Die oberen Presselemente 8A, 8B jedes Formbehälter-Aufnahmeraums 3 sind jeweils als bewegliche Presselemente 8A, 8B ausgestaltet, die zwischen einer Ruhestellung (Fig. 6 bis 8) und einer Pressstellung (Fig. 9) auf das darunter befindliche untere Presselement 9A, 9B der betreffenden Presselemente-Anordnung 3 zu- und diesem wegverschiebbar gelagert ist. Das Gehäuse 2 weist zu diesem Zweck für die vorderen Presselemente 8A, 9A der einzelnen Spalten, in denen die Aufnahmeräume 3 übereinander angeordnet sind, jeweils zwei parallel zueinander verlaufende vordere Führungssäulen 11, 12 auf, die sich entlang sämtlicher übereinander angeordneter Aufnahmeräume 3 der betreffenden Spalte in vertikaler Richtung erstrecken. In entsprechende Weise hat das Gehäuse 2 für die hinteren Presselemente 8B, 9B der einzelnen Spalten, in denen die Aufnahmeräume 3 übereinander angeordnet sind, jeweils zwei parallel zueinander verlaufende hintere Führungssäulen 13, 14 auf, die sich entlang sämtlicher übereinander angeordneter Aufnahmeräume 3 der betreffenden Spalte in vertikaler Richtung erstrecken.

Das oberen Presselemente 8A der vorderen Presselemente-Anordnung 7A jedes Aufnahmeraums 3 ist jeweils als Spannbrücke ausgestaltet, die an ihrem einen Brückenende an der einen vorderen Führungssäule 11 und an ihrem anderen Brückenende an der anderen vorderen Führungssäule 12 verschiebbar gelagert sind. In entsprechender Weise sind die oberen Presselemente 8B der hinteren Presselemente-Anordnung 7B jedes Aufnahmeraums 3 jeweils als Spannbrücke ausgestaltet, die an ihrem einen Brückenende an der einen hinteren Führungssäule 13 und an ihrem anderen Brückenende an der anderen hinteren Führungssäule 14 verschiebbar gelagert sind.

Die unteren Presselemente 9A der vorderen Presselemente-Anordnung 7A jedes Aufnahmeraums 3 sind ebenfalls als Spannbrücke ausgestaltet und an ihrem einen Brückenende fest mit der einen vorderen Führungssäule 11 und an ihrem anderen Brückenende fest mit der anderen vorderen Führungssäule 12 verbunden. In entsprechender Weise sind die unteren Presselemente 9B der hinteren Presselemente-Anordnung 7B jedes Aufnahmeraums 3 an ihrem einen Brückenende fest mit der einen hinteren Führungssäule 13 und an ihrem anderen Brückenende fest mit der anderen hinteren Führungssäule 14 verbunden.

An den Brückenenden haben die oberen und unteren Presselemente 8A, 8B, 9A, 9B jeweils eine Bohrung, welche von einer der Führungssäulen 11, 12, 13, 14 durchsetzt wird.

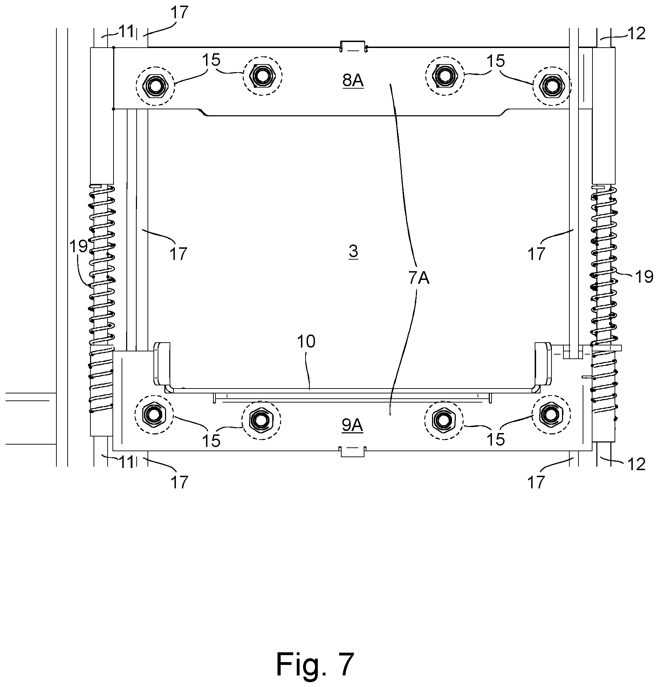

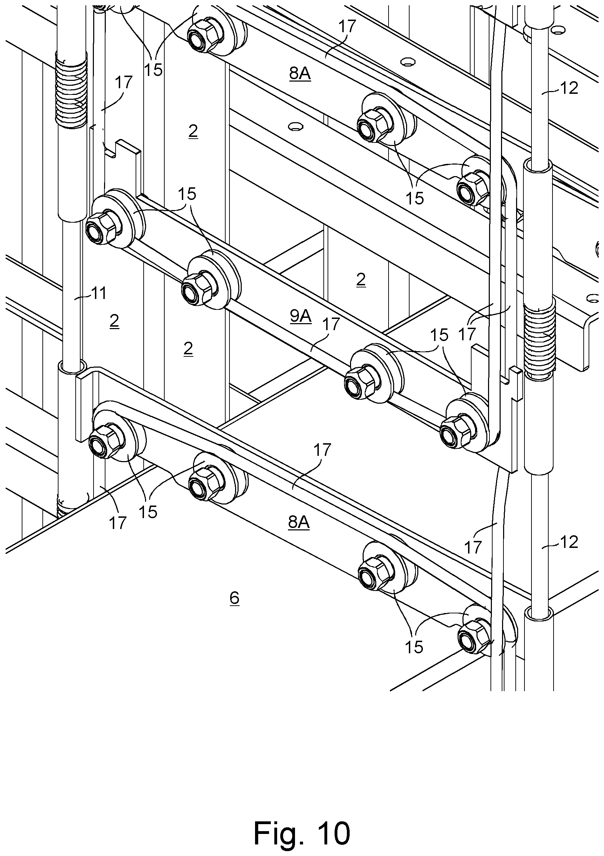

An jedem oberen Presselement 8A, 8B und an jedem unteren Presselement 9A, 9B sind jeweils vier Ablenkelemente 15 für ein als Stahlseil ausgestaltetes Zugelement 17 angeordnet (Fig. 7 bis 10). Die Ablenkelemente 15 sind als Rollen ausgestaltet, die jeweils drehbar an dem ihnen zugeordneten Presselement 8A, 8B, 9A, 9B gelagert sind. Die Achsen, auf denen die Rollen gelagert sind, verlaufen im Wesentlichen in horizontale Richtung und sind parallel zueinander angeordnet.

Ein erstes Ablenkelemente 15 ist jeweils benachbart zu dem einen Brückenende des Presselements 8A, 8B, 9A, 9B, ein zweites Ablenkelement 15 ist benachbart zu dem anderen Brückenende des Presselements 8A, 8B, 9A, 9B und zwei weitere Ablenkelemente 15 15 sind zwischen dem ersten Ablenkelement 15 und zweiten Ablenkelement 15 des betreffenden Presselements 8A, 8B angeordnet. Das Zugelement 17 ist durchgängig über sämtliche Ablenkelemente 15 der Presselemente 8A, 8B, 9A, 9B geführt.

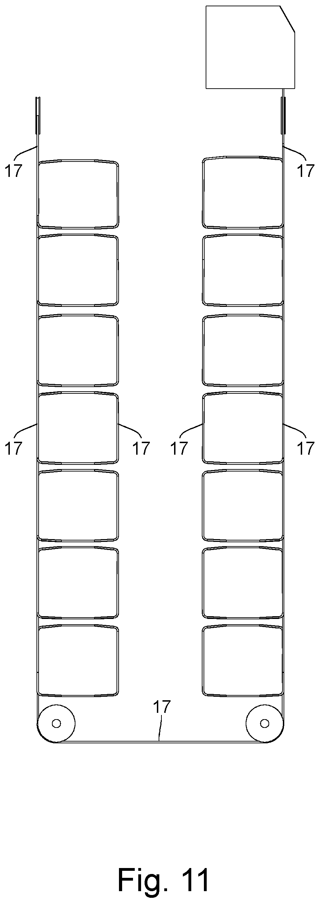

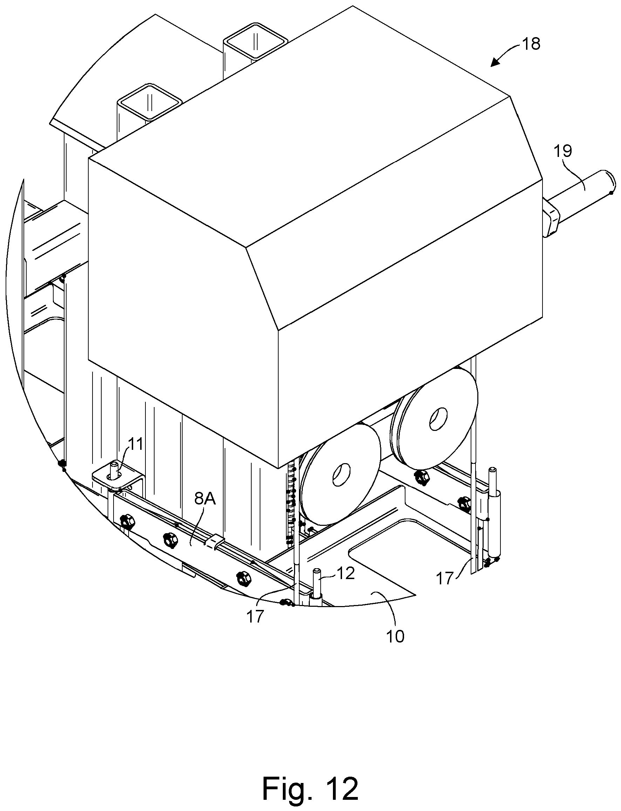

Das Zugelement 17 ist derart über die Ablenkelemente 15 der Presselemente-Anordnungen 7A, 7B geführt, dass beim Aufbringen einer Zugspannung auf das Zugelement 17 die oberen Presselemente 8A, 8B jeweils nach unten auf die ihnen zugeordneten unteren Presselemente 9A, 9B der einzelnen Presselemente-Anordnungen 7A, 7B zu verschoben werden. Wie in Fig. 11 zu sehen ist, ist das Zugelement 17 zum Erzeugen der Zugspannung mit seinem einen Ende mit einem als Seilwinde ausgestalteten Antrieb 18 verbunden. Das andere Ende des Zugelements 17 ist mit einem an dem Gehäuse 2 angeordneten Festlager verbunden. In Fig. 1 bis 3 und in Fig. 12 ist zu sehen, dass der Antrieb 18 am oberen Ende des Gehäuses 2 angeordnet ist und eine Handkurbel zum Spannen des Zugelements 17 aufweist.

Ausgehend vom Festlager zum Antrieb 18 verläuft das Zugelement 17 bei jeder der in Reihe geschalteten Presselemente-Anordnungen 7A, 7B jeweils zunächst über die Ablenkelemente 15 des weiter von dem Festlager entfernten Presselements 8A, 8B, 9A, 9B und danach über die Ablenkelemente 15 des näher an dem Festlager angeordneten Presselements 8A, 8B, 9A, 9B der betreffenden Presselemente-Anordnung 7A, 7B. Von dort verläuft das Zugelement 17 bei der ersten bis vorletzten Presselemente-Anordnung jeweils zur nächsten Presselemente-Anordnung 7A, 7B und bei der letzten Presselemente-Anordnung 7A, 7B zum Antrieb 18 (Fig. 11 und 12).

Die Vorrichtung 1 weist ferner eine Rückstelleinrichtung auf, mittels der die einzelnen Presselemente-Anordnungen 7A, 7B jeweils aus ihrer Pressstellung in die Ruhestellung zurückbewegbar sind. Die Rückstelleinrichtung hat für jede Presselemente-Anordnung 7A, 7B jeweils zwei Rückstellfedern 19, gegen deren Rückstellkraft jeweils die oberen Presselemente 8A, 8B aus der Pressstellung in die Ruhestellung nach oben verschiebbar sind. Wie in Fig. 6 bis 9 zu sehen ist, sind die Rückstellfedern 19 jeweils als Schraubenfedern ausgestaltet, die jeweils auf einer der Führungssäulen 11, 12, 14, 14 angeordnet und mit ihrem unteren Ende gegen das untere Presselement 9A, 9B und mit Ihrem oberen Ende gegen das obere Presselement 8A, 8B der entsprechenden Presselemente-Anordnung 7A, 7B abgestützt sind. Die Federkraft der Rückstellelemente 19 ist so dimensioniert, dass sich die in der Pressstellung befindlichen Presselemente 8A, 8B automatisch in die Ruhestellung zurückstellen, wenn die Zugspannung von dem Zugelement 17 entfernt wird.

In Fig. 1 ist zu sehen, dass die Formbehälter-Aufnahmeräume 3 in dem Gehäuse 2 in zwei Spalten nebeneinander angeordnet sind. In jeder Spalte sind eine Vielzahl von Formbehälter-Aufnahmeräumen 3 übereinander angeordnet. Zwischen den Spalten weist das Gehäuse 2 ein Tragmast 20 auf, der auf einem auf Lenkrollen 21 verfahrbaren Trägerwagen 22 steht und fest mit diesem verbunden ist. Mit dem Tragmast 20 sind die unteren Presselemente 9A, 9B und die Führungssäulen 11, 12, 13, 14 fest verbunden. Benachbart zum oberen Ende des Tragmasts 20 stehen von diesem beidseits Kragarme ab, an denen obere Führungsrollen 23 für das Zugelement 17 drehbar gelagert sind. Am unteren Ende des Tragmasts 20 sind untere Führungsrollen 24 drehbar gelagert, über die das Zugelement 17 von der einen Seite des Tragmasts 20 zur gegenüberliegenden anderen Seite des Tragmasts 20 geführt ist.

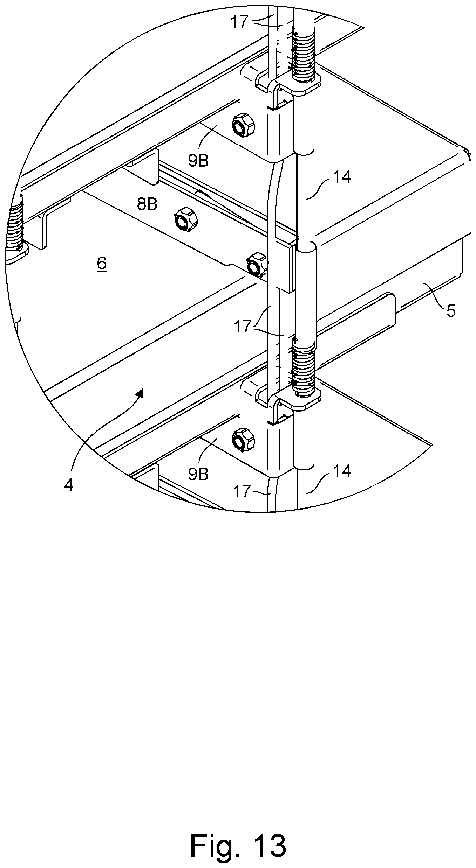

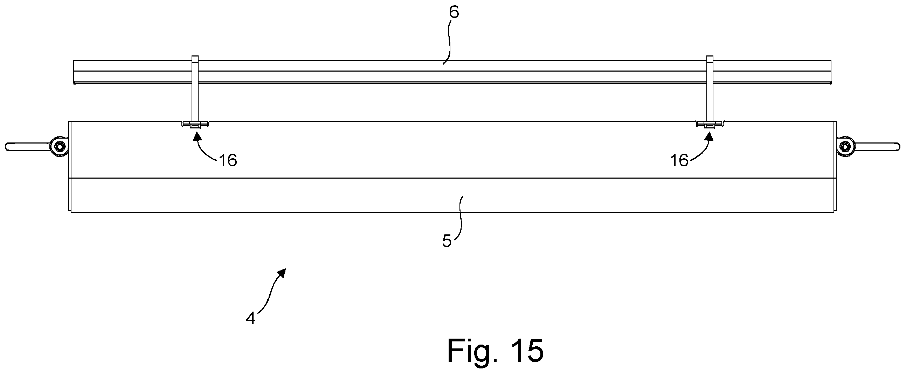

Die erfindungsgemäße Vorrichtung 1 kann mit unterschiedlichen Formbehältern 4 kombiniert werden. Ausführungsbeispiele für solche Formbehälter 4 sind in den Fig. 4, 5 und 12 bis 22 abgebildet. Bei dem Ausführungsbeispiel gemäß Fig. 4 und 5 übergreift der Deckel 6 die Wanne 5 außenseitig. Wenn der Deckel 6 in der Pressstellung auf dem Wannenrand aufliegt (Fig. 5), greift dieser nicht in die Innenhöhlung der Wanne 4 ein.

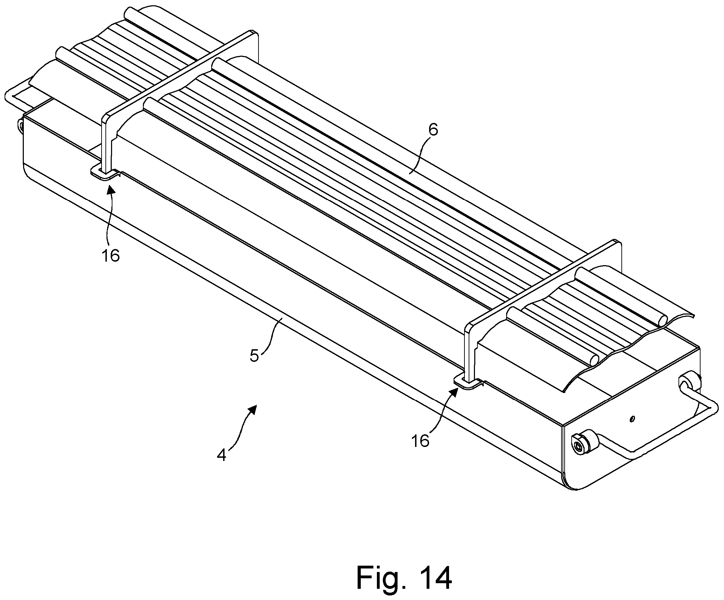

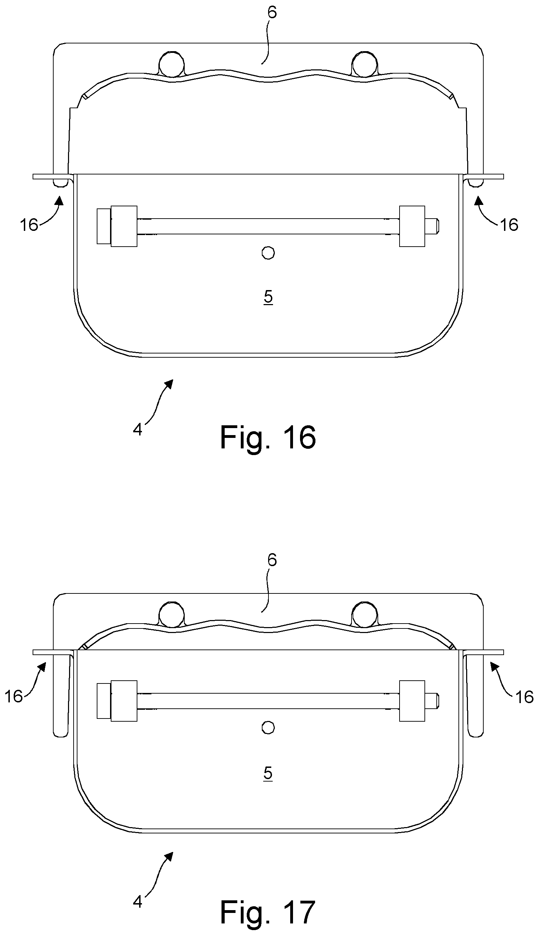

Bei dem Ausführungsbeispiel gemäß Fig. 14 bis 17 ist der Deckel 6 mittels Schiebeführungen 16 zwischen der Ruhestellung und der Pressstellung auf die Innenhöhlung der Wanne 5 zu und von dieser weg verschiebbar gelagert. Wie in Fig. 17 zu sehen ist, greift auch bei diesem Ausführungsbeispiel der Deckel 6 nicht in die Innenhöhlung der Wanne 5 ein, wenn er auf dem Wannenrand aufliegt.

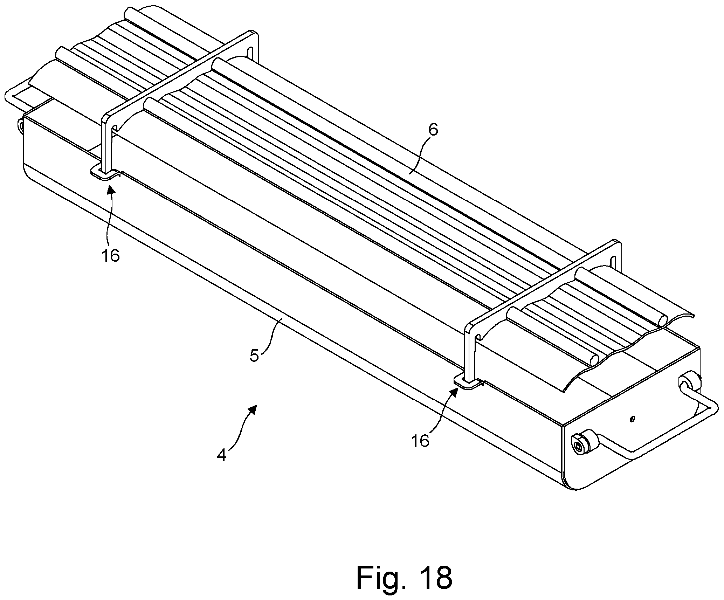

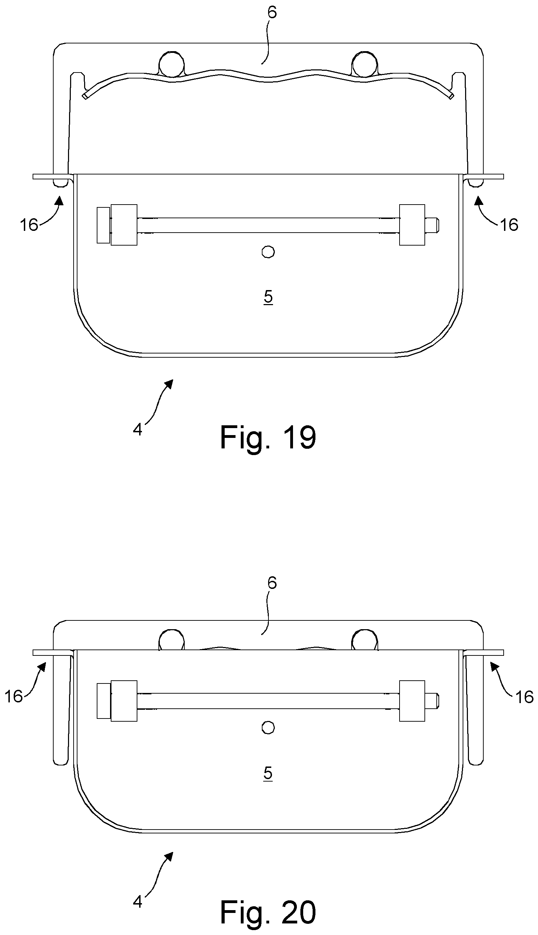

Auch bei dem Ausführungsbeispiel gemäß Fig. 18 bis 20 ist der Deckel 6 mittels Schiebeführungen 16 zwischen der Ruhestellung und der Pressstellung auf die Innenhöhlung der Wanne 5 zu und von dieser weg verschiebbar gelagert. Wie in den Fig. 19 und 20 zu sehen ist, greift bei diesem Ausführungsbeispiel der Deckel 6 jedoch in die Innenhöhlung der Wanne 5 ein, wenn er auf dem Wannenrand aufliegt.

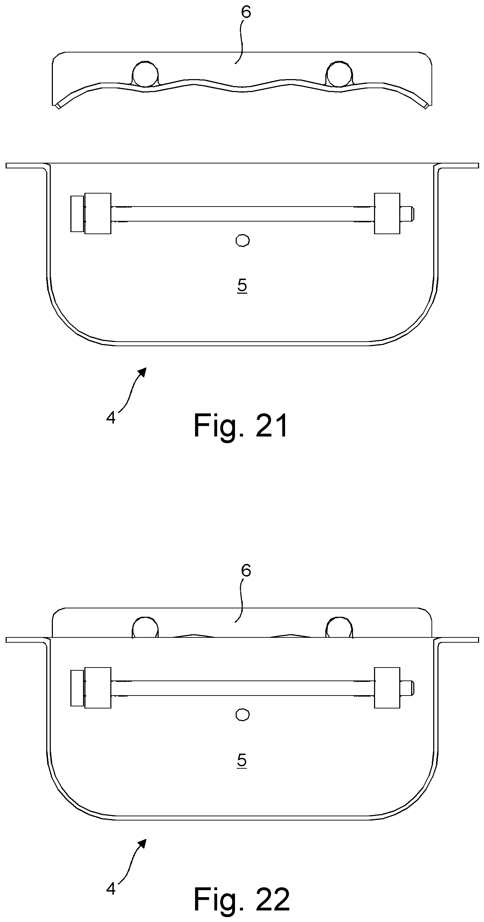

Bei dem Ausführungsbeispiel gemäß Fig. 21 bis 22 ist der Deckel 6 kleiner als die Öffnung der Wanne 6 und der Deckel 6 liegt in der Pressstellung nicht auf dem Wannenrand auf.

## Patentansprüche

1. Vorrichtung (1) zum Herstellen von Fleischprodukten, wobei die Vorrichtung (1) ein an zumindest einer Seite offenes Gehäuse (2) zum Aufnehmen einer Mehrzahl von übereinander angeordneten, jeweils mit einer Fleischportion befüllbaren separaten Formbehältern (4) umfasst, und wobei an dem Gehäuse (2) zumindest ein Antrieb (18) gelagert ist, **dadurch gekennzeichnet, dass** in dem Gehäuse (2) mehrere Formbehälter-Aufnahmeräume (3) übereinander angeordnet sind, die jeweils zur Aufnahme eines einzelnen Formbehälters (4) oder mehrerer in horizontaler Richtung nebeneinander angeordneter Formbehälter (4) vorgesehen sind, dass jedem Formbehälter-Aufnahmeraum (3) jeweils mindestens eine Presselemente-Anordnung (7A, 7B) mit einem oberhalb des betreffenden Formbehälter-Aufnahmeraums (3) angeordneten oberen Presselement (8A, 8B) und einem unterhalb des betreffenden Formbehälter-Aufnahmeraums (3) angeordneten unteren Presselement (9A, 9B) zugeordnet ist, dass die oberen und unteren Presselemente (8A, 8B, 9A, 9B) der einzelnen Presselemente-Anordnungen (7A, 7B) jeweils derart an dem Gehäuse (2) gelagert sind, dass sie zwischen einer Ruhestellung und einer Pressstellung aufeinander zu und voneinander wegbewegbar sind, dass an mindestens einem Presselement (8A, 8B, 9A, 9B) jeder Presselemente-Anordnung (7A, 7B) jeweils mindestens ein Ablenkelement (15) für ein Zugelement (17) angeordnet ist, dass das Zugelement (17) über die Ablenkelemente (15) mehrerer Presselemente-Anordnungen (7A, 7B) derart geführt ist, dass die oberen und unteren Presselemente (8A, 8B, 9A, 9B) dieser Presselemente-Anordnungen (7A, 7B) durch Aufbringen einer Zugkraft auf das mindestens eine Zugelement (17) jeweils aus ihrer Ruhestellung in die Pressstellung relativ zueinander bewegbar sind, und dass das mindestens eine Zugelement (17) zum Positionieren der Presselemente-Anordnungen (7A, 7B) in der Pressstellung an seinem einen Ende gegen das Gehäuse (2) abgestützt ist und mit an seinem anderen Ende mit dem Antrieb (18) in Antriebsverbindung steht.

2. Vorrichtung (1) nach Anspruch 1, **dadurch gekennzeichnet, dass** jeweils ein Presselement (9A, 9B) jeder Presselemente-Anordnung (7A, 7B) fest mit dem Gehäuse (2) verbunden und das andere Presselement (8A, 8B) als bewegliches Presselement (8A, 8B) ausgestaltet ist, welches auf das zuerst genannte Presselement (9A, 9B) zu und von diesem weg bewegbar an dem Gehäuse (2) gelagert ist.

3. Vorrichtung (1) nach Anspruch 1 oder 2, **dadurch gekennzeichnet, dass** das Zugelement (17) über die Ablenkelemente (15) von mindestens drei Presselemente-Anordnungen (7A, 7B) geführt ist, dass das Zugelement (17) - ausgehend von seinem mit dem Gehäuse (2) verbundenen einen Ende zu seinem mit dem Antrieb (18) verbundenen anderen Ende - bei jeder der in Reihe geschalteten Presselemente-Anordnungen (7A, 7B) jeweils zunächst über die Ablenkelemente (15) des entlang des Zugelements (17) näher an dem Antrieb (18) angeordneten Presselements (8A, 8B, 9A, 9B) und danach über die Ablenkelemente (15) des entlang des Zugelements (17) weiter von dem Antrieb (18) entfernten Presselements (8A, 8B, 9A, 9B) der betreffenden Presselemente-Anordnung (7A, 7B) verläuft, und dass das Zugelement (17) im weiteren Verlauf bei der ersten bis vorletzten Presselemente-Anordnung jeweils zur einer weiteren Presselemente-Anordnung (7A, 7B) und bei der letzten Presselemente-Anordnung (7A, 7B) zum Antrieb (18) führt.

4. Vorrichtung (1) nach einem der Ansprüche 1 bis 3, **dadurch gekennzeichnet, dass** das Gehäuse (2) mindesten eine Führungssäule (11, 12, 13, 14) aufweist, die sich entlang mehrerer übereinander angeordneter Formbehälter-Aufnahmeräume (3) erstreckt, und dass die beweglichen Presselemente (8A, 8B) der diesen Formbehälter-Aufnahmeräumen (3) zugeordneten Presselemente-Anordnungen (7A, 7B) an der mindestens einen Führungssäule (11, 12, 13, 14) verschiebbar gelagert sind.

5. Vorrichtung (1) nach Anspruch 4, **dadurch gekennzeichnet, dass** die fest mit dem Gehäuse (2) verbundenen Presselemente (9A, 9B) an der mindestens einen Führungssäule (11, 12, 13, 14) gelagert und gegen axiales Verschieben entlang der Führungssäule (11, 12, 13, 14) gesichert sind.

6. Vorrichtung (1) nach Anspruch 4 oder 5, **dadurch gekennzeichnet, dass** die Vorrichtung (1) mindestens zwei parallel zueinander verlaufende Führungssäulen (11, 12, 13, 14) aufweist, zwischen denen mehrere übereinander angeordnete Formbehälter-Aufnahmeräume (3) liegen, und dass die diesen Formbehälter-Aufnahmeräumen (3) zugeordneten Presselemente (8A, 8B, 9A, 9B) jeweils als Spannbrücken ausgestaltet sind, die an ihrem einen Brückenende an der einen Führungssäule (11, 13) und an ihrem anderen Brückenende an der anderen Führungssäule (12, 14) gelagert sind.

7. Vorrichtung (1) nach Anspruch 6, **dadurch gekennzeichnet, dass** jedem Formbehälter-Aufnahmeraum (3) jeweils eine erste und eine zweite Presselemente-Anordnung (7A, 7B) zugeordnet ist, deren Presselemente (8A, 9A, 8B, 9B) jeweils als an Führungssäulen (11, 12, 13, 14) gelagerte Spannbrücken ausgestaltet sind, dass die Spannbrücken der ersten Presselemente-Anordnungen (7A) in einer ersten Vertikalebene und die Spannbrücken der zweiten Presselemente-Anordnungen (7B) in einer parallel zu der ersten Vertikalebene beabstandeten zweiten Vertikalebene angeordnet sind.

8. Vorrichtung nach einem der Ansprüche 1 bis 7, **dadurch gekennzeichnet, dass** die Formbehälter-Aufnahmeräume (3) in dem Gehäuse (2) matrixförmig in mehreren Reihen und mehreren Spalten angeordnet sind, und dass das mindestens eine Zugelement (17) über die Ablenkelemente (15) der Presselemente-Anordnungen (7A, 7B) sämtlicher Reihen und Spalten verläuft.

9. Vorrichtung (1) nach einem der Ansprüche 1 bis 8, **dadurch gekennzeichnet, dass** das mindestens eine Zugelement (17) als Seil ausgestaltet ist.

10. Vorrichtung (1) nach Anspruch 9, **dadurch gekennzeichnet, dass** der Antrieb (18) als Seilwinde ausgestaltet ist.

11. Vorrichtung (1) nach einem der Ansprüche 1 bis 10, **dadurch gekennzeichnet, dass** die Ablenkelemente (15) als Rollen ausgestaltet sind, die jeweils drehbar an dem ihnen zugeordneten Presselement (8A, 9A, 8B, 9B) gelagert sind.

12. Vorrichtung (1) nach einem der Ansprüche 1 bis 11, **dadurch gekennzeichnet, dass** die Vorrichtung (1) eine Rückstelleinrichtung aufweist, mittels der die einzelnen Presselemente-Anordnungen (7A, 7B) jeweils aus der Pressstellung in die Ruhestellung zurückbewegbar sind.

13. Vorrichtung (1) nach Anspruch 12, **dadurch gekennzeichnet, dass** die Rückstelleinrichtung für die einzelnen Formbehälter-Aufnahmeräume jeweils mindestens eine Rückstellfeder aufweist, gegen deren Rückstellkraft jeweils die oberen und unteren Presselemente der betreffenden Presselemente-Anordnung aus der Pressstellung in die Ruhestellung verstellbar sind.

14. Vorrichtung (1) nach Anspruch 12 oder 13, **dadurch gekennzeichnet, dass** die Rückstelleinrichtung ein Zugmittel aufweist, das derart mit den Presselementen (8A, 9A, 8B, 9B) der Presselemente-Anordnungen (7A, 7B) in Antriebsverbindung steht, dass die Presselemente-Anordnungen (7A, 7B) durch Aufbringen einer Zugkraft auf das Zugmittel aus der Pressstellung in die Ruhestellung verstellbar sind.
